# EUROPÄISCHE PATENTANMELDUNG

(11) **EP 1 058 023 A2**
(43) Veröffentlichungstag der Anmeldung: **06.12.2000**
(21) Anmeldenummer: 00106596.0
(22) Anmeldetag: 28.03.2000
(51) Int. Cl.: F16D 65/16, F16D 55/228

(54) **Bremskolben für einen Bremssattel einer Scheibenbremsanlage**

(30) Priorität: 31.05.1999 DE 19925005
(71) Anmelder: Dr.Ing. h.c.F. Porsche Aktiengesellschaft, 70435 Stuttgart (DE)
(72) Erfinder: von Sivers, Rolf, 71287 Weissach-Flacht (DE); Thomas, Claus, 71686 Remseck-Pattonville (DE); Häsler, Karl, 71287 Weissach (DE)

(57) **Zusammenfassung**

Die Erfindung betrifft Maßnahmen an einem Bremskolben (12,13) für einen Bremssattel (1) zur Reduzierung des Bremsenquietschens für eine Scheibenbremsanlage (3). Um kostengünstig und wirkungsvoll ein Bremsenquietschen zu unterdrücken, wird vorgeschlagen, zwischen dem Kolben (12,13) und dem Bremsbelag (20) eine gelenkige Verbindung vorzusehen. Dies kann bei bekannten, topfförmigen und zum Bremsbelag (20) hin offen ausgebildeten Kolben (12,13) dadurch geschehen, daß in der Öffnung des Kolbens (12,13) ein Einsatz (16,17) mit balliger Oberfläche (18,19) vorgesehen ist.

## Beschreibung

Die Erfindung betrifft Maßnahmen an einem Bremskolben für einen Bremssattel zur Reduzierung des Bremsenquietschens für eine Scheibenbremsanlage.

Die als Bremsenquietschen bekannte Geräuschentwicklung eines Bremssystemes beruht auf einer Schwingung der Systemkomponenten Bremssattel und Bremsscheibe, die im gebremsten Zustand über die Bremsbeläge direkt miteinander gekoppelt sind. Von Einfluß sind ferner der Radträger, an dem der Bremssattel befestigt ist, sowie Achse und Aufnahme der Bremsscheibe. Bremsenquietschen ist im Betrieb des Fahrzeuges aufgrund der Tonhöhe ein sehr störendes Geräusch, das unter allen Umständen vermieden werden sollte.

Es ist daher Aufgabe der Erfindung, kostengünstige Maßnahmen zur wirkungsvollen Unterdrückung des Bremsenquietschens aufzuzeigen.

Diese Aufgabe wird erfindungsgemäß mit den Merkmalen der unabhängigen Patentansprüche gelöst.

Die Erfindung geht dabei von der Erkenntnis aus, daß das Bremsenquietschen bei einer bestimmten Tonhöhe, hier im Frequenzbereich von ca. 2 kHz, aus einer Überlagerung von Schwingungsbildern herrührt. Die Schwingungsbilder von Bremssattel und Bremsscheibe überlagern sich hierbei und führen aufgrund von Selbsterregung zu einer anfachenden, d.h. stets ansteigenden Schwingung. Die maximale Schwingungsamplitude ist erreicht, wenn die Eigendämpfung des Gesamtsystemes ein weiteres Ansteigen der Schwingungsamplitude verhindert.

Ferner wurde erkannt, daß diese Überlagerung der Schwingungsbilder bei jedem Bremsvorgang auftreten kann und unabhängig vom Verschleißzustand der beteiligten Bremsenbauteile ist. Ferner wurde im vorliegenden Bremssystem erkannt, daß die Eigenfrequenz der Bremsscheibe z.B. vom Bremsdruck als Betriebsparameter abhängig ist, während die Eigenfrequenz des Bremssattels über den Bremsdruck weitgehend konstant bleibt. Weiterhin in Betracht ziehend, daß Maßnahmen an der Bremsscheibe aufgrund der dort herrschenden Platzverhältnisse sowie thermischen und mechanischen Beanspruchungen nur schwer durchführbar sind, betreffen die aus den vorgenannten Erkenntnissen abgeleiteten Maßnahmen zur Verminderung des Bremsenquietschens den Bremssattel.

Erfindungsgemäß wird vorgeschlagen, Kolben des Bremssattels so auszubilden, daß der Bremsbelag am Kolben gelenkig gelagert ist. Dies kann vorzugsweise dadurch erreicht werden, daß die Kolben eine ballige Oberfläche aufweisen. Bei bekannten, topfförmigen und zum Bremsbelag hin offen ausgebildeten Kolben kann hierzu in der Öffnung des Kolbens ein Einsatz mit balliger Oberfläche vorgesehen sein. Durch diese einfache Maßnahme kann mit geringem Kostenaufwand ein Bremsenquietschen wirkungsvoll vermindert oder gar unterdrückt werden, da sich ein vom derart ausgebildeten Kolben bewegter Bernsbelag schrägstellen und damit an die Bremsscheibe anpassen kann. Selbstverständlich werden auch Schrägstellung der Scheibe ausgeglichen. In vorteilhafter Weise ist damit eine Schwingungsanregung, die aus einer nicht gleichmäßigen Anlage des Bremsbelages herrührt, vermindert. Darüber hinaus ist die schwingungstechnische Ankopplung der Bremsscheibe an den Bremssattel auch bei geringen Bremsdrücken verbessert, so daß am Bremssattel vorgenommene Dämpfungsmaßnahmen auch Wirkung im Hinblick auf die Bremsscheibe entfalten können und damit ein Bremsenquietschen wirkungsvoll vermindert oder unterdrückt werden kann.

Die vorgeschlagene Maßnahme ist von der Bauart des Bremssattels unabhängig. Wesentlich ist die punktförmige Auflage des Kolbens auf den Bremsbelag; diese kann auch durch eine kegel- oder spitzenförmige Oberfläche des Kolbens erreicht werden.

Die Erfindung ist nachstehend anhand des in den Figuren dargestellten Ausführungsbeispieles näher erläutert.

Es zeigen
- Fig. 1: eine Ansicht eines Bremssattels und einer Bremsscheibe mit Darstellung der Schwingungsformen,
- Fig. 2: in einer Draufsicht einen Teilschnitt durch einen Bremssattel, dessen Kolben ballige Oberflächen aufweisen und
- Fig. 3: eine Darstellung nach Fig. 3, jedoch mit einer schräggestellten Bremsscheibe.

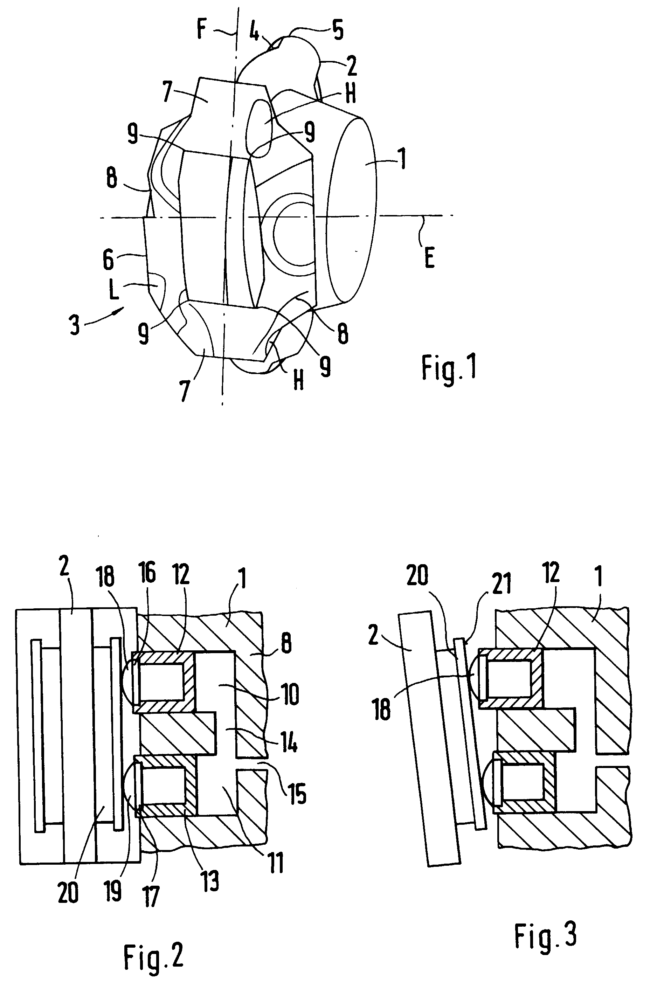

Fig. 1 zeigt den Bremssattel 1 und die Bremsscheibe 2 einer Festsattel-Bremsanlage 3. Die Anbindung des Festsattel-Bremssattels 1 und der Bremsscheibe 2 an einem nicht gezeigten Radträger sind an sich bekannt und daher zur Vereinfachung nicht dargestellt. Wie in der überhöhten Darstellung zu erkennen ist, weist die Bremsscheibe 2 ein Schwingungsbild auf, bei dem sich auf der sich drehenden Bremsscheibe 2 in Umfangsrichtung raumfest stehende Schwingungsberge 4 und Schwingungsknoten 5 bilden. Das dargestellt Schwingungsbild gilt hier für eine Eigenfrequenz im Bereich von 2 kHz.

Die Schwingungsform des Bremssattels 1 ist abhängig von seiner Bauart; bei der hier gezeigten Festsattel-Bremsanlage 3 schwingt der Bremssattel 1 in einem Bereich L nahe einer Auflagefläche 6 an den Radträger kaum und die größten Schwingungsamplituden ergeben sich in Bereichen H an Übergangsbereichen 9 des Bremssattels, die die beiden Wangen 8 des Bremssattels 1 miteinander verbinden. Vereinfacht dargestellt wirken hierbei Übergangsbereiche 9 zwischen den Stegen 7 und den Wangen 8 als Gelenke. Insgesamt ergibt sich eine Schwingungsform des Bremssattels 1, die sich ungefähr als eine Überlagerung einer Torsionsbewegung um eine Achse E parallel zu einer Radachse und einer Torsionsbewegung um eine Achse F tangential zur Bremsscheibe 2 beschreiben läßt.

Fig. 2 zeigt in einer Draufsicht einen Teilschnitt durch den Bremssattel 1, daß innerhalb der Wangen 8 Bohrungen 10, 11 vorgesehen sind, in denen topfförmige Kolben 12, 13 gehalten sind. Die beiden Bohrungen 10, 11 sind durch einen Verbindungsraum 14 verbunden und können über einen Anschluß 15 mit Bremsdruck beaufschlagt werden. In Öffnungen der Kolben 12, 13 sind Kappen 16, 17 vorgesehen, die jeweils eine ballige Oberfläche 18, 19 aufweisen. Die balligen Oberflächen 18, 19 wirken auf die Rückseite eines Bremsbelages 20, der seinerseits an der Bremsscheibe 2 anliegt. Die Rückseite de Bernsbelages 20 weist keine Einrichtungen zur Aufnahme der balligen Oberflächen 18,19 auf. Auf der gegenüberliegenden Seite der Bremsscheibe 2 ist die Anordnung nach Fig. 3 spiegelbildlich ein zweites Mal vorgesehen.

Während in dem durch die Bohrungen 10, 11 und den Verbindungsraum 14 gebildeten Druckraum stets derselbe Druck herrscht, ist die Volumenaufteilung in den Bohrungen 10 und 11 nicht festgelegt. Mit anderen Worten: die Stellung der Kolben 12 und 13 muß nicht dieselbe sein, sondern die beiden Kolben 12 und 13 üben denselben Druck aus.

Dies ist der Grund dafür, daß bei einer Schrägstellung der Bremsscheibe 2, wie Sie in Fig. 3 stark überzeichnet angedeutet ist, der Bremsbelag 20 zusammen mit der Bremsscheibe 2 schräggestellt werden kann. Die balligen Oberflächen 18, 19 der Kappen 16, 17 sorgen dafür, daß sie auf einer Rückseite 21 des Bremsbelages 20 abrollen, ohne daß hierbei hohe Kantenpressungen oder ähnliches entstehen würde. Dies wäre dann der Fall, wenn die Kolben 12, 13 mit ihrer ringförmigen Auflagefläche unmittelbar auf der Rückseite 21 aufliegen würden. Zwar ist auch hier eine Schrägstellung des Bremsbelages 20 möglich, wobei jedoch der Kraftverlauf bei einem ersten Herausschwenken des Bremsbelages 20 aus der planen Auflage der Kolben 12, 13 heraus einen deutlichen Sprung aufweist. Dieser Sprung im Kraftverlauf führt dazu, daß besonders im Bereich kleiner und kleinster Schrägstellungen der Bremsbelag 20 diesen Schrägstellungen der Bremsscheibe 2 nicht oder jedenfalls nicht vollständig folgen kann.

Die Bremsbeläge 20 sind durch die balligen Oberflächen 18, 19 um 2 Achsen schwenkbar: eine erste Achse A, die in der Ebene der Bremsscheibe 2 senkrecht zu der Achse E liegt, und eine zweite Achse B, die parallel zu einer Tangente an der Bremsscheibe 2 verläuft.

Die vorgenannten Maßnahmen und Schwingungsbilder gelten insbesondere für einen als Festsattel ausgebildeten Bremssattel 1. Auch auf andere Formen von Bremsanlagen 3 sind diesen Maßnahmen entsprechend unter Berücksichtigung der veränderten Ausgangskonstruktion und Schwingungsformen anwendbar. Dies gilt insbesondere für Schwimmsattel-Bremsen, bei denen an der Sattelaußenseite, an der der Bremsbelag direkt an einem mit dem Schwimmsattel verbundenen Rahmen anliegt, zusätzlich zur balligen Oberflächen des Bremskolbens eine gelenkige, vorzugsweise ballige Auflage für den Bremsbelag vorzusehen ist. Und dies gilt auch für andere Schwingungsformen, deren Eigenfrequenzen außerhalb des Bereichs der Eigenfrequenz des dargestellten Ausführungsbeispieles liegen.

## Patentansprüche

1. Bremssattel für eine Scheibenbremsanlage, wobei zumindest ein Kolben auf einen Bremsbelag einwirkt, dadurch gekennzeichnet, daß zwischen dem Kolben und dem Bremsbelag eine gelenkige Verbindung vorgesehen ist.

2. Bremssattel nach Anspruch 1, dadurch gekennzeichnet, daß der Kolben des Bremssattels eine ballige Oberfläche aufweist.

3. Bremssattel nach Anspruch 1, dadurch gekennzeichnet, daß in einer Öffnung der topfförmigen und zum Bremsbelag hin offen ausgebildeten Kolben ein Einsatz mit balliger Oberfläche vorgesehen ist.

4. Bremssattel nach einem der Ansprüche 1 bis 3, dadurch gekennzeichnet, daß an einer dem Kolbe gegenüberliegenden Anlagefläche für einen zweiten Bremsbelag ebenfalls eine gelenkige Verbindung vorgesehen ist.
